# EUROPEAN PATENT APPLICATION

(11) **EP 2 063 621 A1**
(43) Date of publication of application: **27.05.2009**
(21) Application number: 07291396.5
(22) Date of filing: 23.11.2007
(51) Int. Cl.: H04M 3/42, H04W 4/00

(54) **A mobile telephone call-back method run on the SIM card**

(71) Applicant: Axalto S.A., 92190 Meudon (FR)
(72) Inventor: Larduinat, Xavier, c/o Axalto S.A., 92190 Meudon (FR)
(74) Representative: Jacquot, Ludovic R. G.

(57) **Abstract**

The invention relates to a mobile telephony call-back method comprising the steps which consist of having a call-back server set a voice connection between a first and a second phone equipment the address of which are indicated by said sending of information e.g. an SMS or USSD message made to the call-back server (20), by the call-back-server initiating calls to the first and second phone equipments on phone network(s) (50,60) of the first and second phone equipments (30,35,40) and at least part of the voice connection being supported by the internet, the method comprising the step which consists in having the said information generated by a software application running on the SIM card of the mobile phone.

## Description

The invention relates to call-back telephony methods and devices.

The invention relates more specifically to schemes of mobile voice communication which make use of voice-over-IP communication for at least part of the path of the voice and which also implement a call-back principle for lowering the costs of the voice communication. One example of such scheme consists in a web service. triaaered from any computer connected to the internet, and which consists in filling a form on the internet, i.e. a downloaded html page, with the phone number of two phone equipment, and once a web server hosting the html page receives such html page filled with the phone numbers, then the two phone equipments corresponding to the two phone numbers are called by the web server.

The voice travels both onto the internet, beared by voice-over-IP protocol, then ontoa traditional telephony networks via gateway(o) between internet and the phone network(s).

The scheme is beneficial to the person who launches such call, i.e. the holder of one of the two phones. Several reasons exist for such benefit : all calls on the traditional telephony network are inbound : both the phone holder having initiated the call and the second phone holder receive an inbound call, i.e. a regular call which originates from the gateway and to the considered phone. Inboud calls are cheaper than outbound calls in most of the existing situations.

Although one situation exists, as is the case in the US, where the holder of a called phone in a regular network (either landline or mobile) has to pay an airtime fee, i.e. a standard fee per minute, the airtime fee is very low, such as around 2 cents of a dollar per minute.

Another situation existe, as in France, where a fee must be paid by a caller reaching a French mobile phone, based on the principle that allowing such access to the called phone is a service rendered by the mobile operator. In this case, it is the caller who has to pay the fee to the mobile operator, and the fee is not related to the airtime of the communication. Once again, the cost of this fee is very low, around 13 cents of a Euro per a call.

It is therefore understandable that this type of fees related to inbound regular calls, i.e. the call-back fees, are the main charges for such voice-over-IP call-back schemes, as voice-over-IP is usually considered as free of direct charges. This is particularly true for calls implying a traveling mobile phone holder, where roaming fees no more exist because the traveling phone holder now only receives an inbound call and no outbound call of the roaming type has to be carried out. Known call-back phone services making use of voice-over-IP, i.e. voice communication based on voice-over IP plus call on a regular phone network (either landline or mobile), such as Jajah.com, present other advantages.

They are web services, i.e. services launched from the web and hence requiring no software installation on the client computer. Such known services work with a usual web browser, such as Microsoft internet explorer, Mozilla Firefox, or even Opera in case of launching the service from a mobile handset hosting such last type of web browser.

Such web services are nomade : they can be launched from any PC or any computer.

These last advantages come in addition to the scheme of full voice-over-IP communication such as Skype, Skype-out, which require a local client software installed or the computer of the end-user.

The pricing of voice-over-IP call-back services is as low as pure voice-over-IP, but the quality of the service is better, because standard landline and mobile phones are used which have better audio capabilities.

Voice-over-IP call-back services would be particularly valuable for the holder of a mobile phone who would be able to launch such service from his mobile phone, without having to use a PC connected to the internet for launching the service. Placing a web browser on the mobile phone for this purpose is a possibility, but, while technically possible, remains hard to be implemented on a large scale. Indeed, no universal browser exists for mobile phones, and mobile phones hosting a web browser remain high cost mobile phones, and may be long to implement on large scales. The purpose of the invention is to solve these different problems.

Such purpose is achieved by means of the invention as recited in the appended claims Other purposes, aspects, and benefits of the invention will appear throughout the following description, which is made in reference to the accompanying drawings, on which :
- figure 1 depicts a telecommunication system comprising internet facilities and local telephony networks, the system being arranged for performing a call-back method according to an embodiment nf the invention.
- figure 2 is a flowchart illustrating different steps performed by a call-back SIM application according tn an embodiment of the invention.
- Figure 3 is a detailed view of a particular step of the flowchart of figure 2.

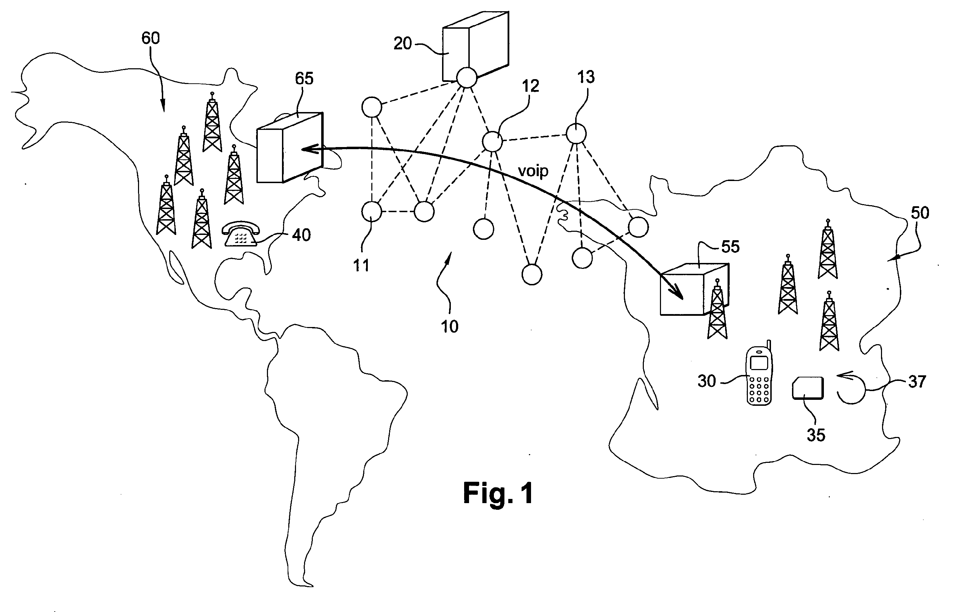

On figure 1, the internet network is represented under reference 10 and as a set of processing points 11, 12, 13, .... spread over a large area.

A particular internet server is represented under reference 20 which is a call-back server, the role of which will be described here-below.

The system of figure 1 comprises two phones, i.e. a mobile phone equipment 30 and a landline phone equipment 40, which are used for a voice communication.

In the present example, both phones originally belong to US networks, i.e. a landline US network for landline phone equipment 40 and a US mobile network for mobile phone equipment 30. Despite mobile phone equipment 30 belongs to such a US mobile network, mobile phone equipment 30 is located in French territory, i.e. mobile phone equipment 30 is considered here in a roaming situation. In other words, the holder of the mobile phone equipment 30 is a US citizen currently on a trip in France. 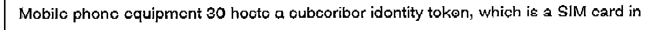 the present example.

Communications of mobile phone equipment 30 are supported by a French mobile operator network 50, in particular incoming phone calls which will be used in the present 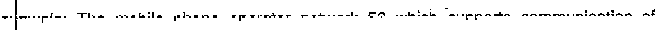 mobile phone equipment 30, including calls incoming onto mobile phone equipment 30. results from agreements between the US mobile phone operator of mobile phone equipment 30 and such French mobile operator, and mobile phone equipment 30 gets connected to mobile phone operator's network 50 as soon as mobile phone equipment 30 enters into France, determining such enabled French mobile operator by reading the reaming list which is conventionally stored in the SIM card 35

Landline network supporting the landline phone equipment 40 is represented under reference 40.

The present embodiment will be described in the case of a call initiated by mobile phone equipment 30 in the French territory and directed to landline phone equipment 40 based in the US.

Voice communication between phones 30 and 40 is carried by the respective networks 50 and 60 and by the internet 10. More specifically, the path of voice originating from mobile phone equipment 30 is successively carried by mobile network 30 internet network 10, and landline network 60, and vice versa.

A gateway 55 is placed for interfacing between internet network 10 and French mobile network 50. Another gateway 65 is placed for interfacing between internet network 10 and US landline network 50.

Let's assume the mobile phone equipment 30 initiates a voice communication with phone 40. For this purpose, mobile phone equipment 30 is used in the present embodiment fnr More specifically, the subscriber identity token 35 of mobile phone equipment 30 rune an application 37 which porforme a series of steps described below and which allow the holder of mobile phone equipment 30 to easily and efficiently actuate internet call-back server 20 into setting a low-cost voice communication between mobile pnone equipment 30 and landline phone equipment 40

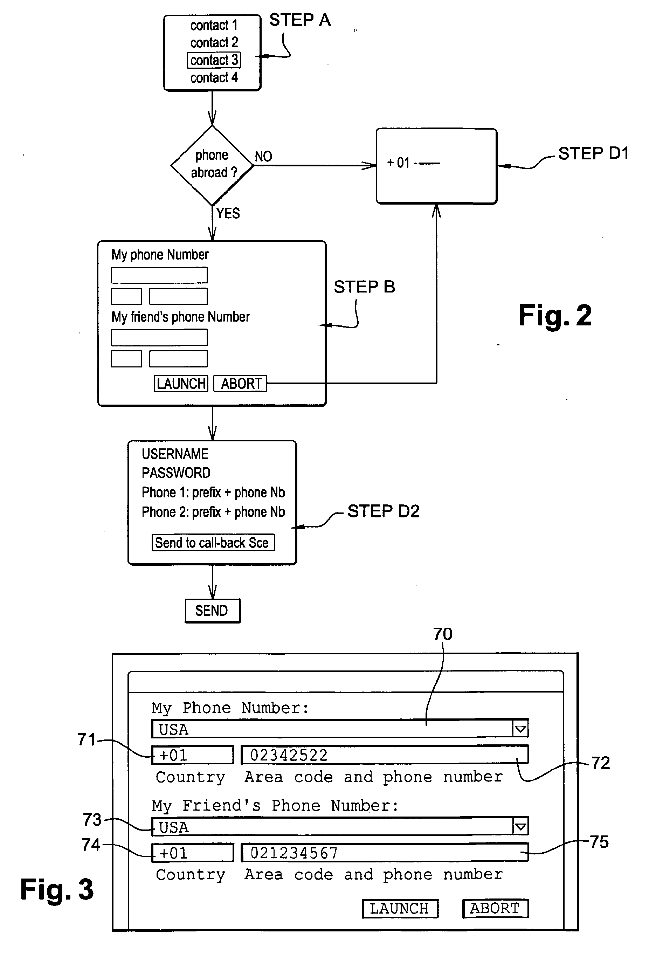

Referring now to figure 3, the holder of mobile phone equipment 30 is first accessing to his phonebook database as stored inside subscriber identity module 35.

Visual interface of the phonebook is depicted as SI LPA on figure 3. Holder of mobile phone equipment 30 then actuates an entry of such phonebook, for example entry called "contact 3". Application 37 is automatically triggered as soon as a contact is actuated. Application 37 then checks whether the mobile phone equipment 30 is currently inside or outside the USA, by a short exchange with the mobile phone hosting the subscriber identity token, and return by such mobile phone of the current location of the mobile phone.

If the mobile phone equipment 30 is determined by the application 37 as currently outside the US, then application 37 takes the lead onto the process of setting the call and in response to the holder of the phone actuating contact 3, then application 27 displays a further screen to the holder as represented under STEP B on figure 3.

Such further screen indicates to the holder that the phone is now enabled for triggering a call-back process, for example a Jajah call-back process. In the present case, a screen is displayed which consists in a form made of a series of windows which have been filled by the application 37 in response to actuation of contact 3. The three first windows 70, 71 and 72 of such screen identify the mobile phone equipment 30, i.e. the first window 70 is filled with the country the mobile phone equipment belongs to, in the present case USA. The two following windows 71 and 72 constitute an identifier of the mobile, in the present case the country dialing prefix, here +01 for the USA, and then the phone number of the mobile phone equipment 30. The three first windows 70, 71 and 72 hold the following header for helping the holder of the mobile phone to recognize their role :"My phone number".

Next windows 73, 74 and 75 aim at identifying the target of the call, i.e. landline phone equipment 40 corresponding to contact 3. Window 73 comprises an indication of the country landline phone equipment 40 belongs to, i.e. USA in the present case. Windows 74 and 75 comprise respectively the country dialing prefix for the phone number of landline phone equipment 40 , i.e. +01 for the US and the phone number of landline phone equipment 40.

The three windows 73, 74 and 75 hold the following header :"My friend's phone number".

The form screen as displayed in STEP B comprises two buttons 80 and 85, carrying respective indications "abort" and "launch".

As depicted at STEP C, if the holder actuates the "Launch" button then the call-back process continues as will be described below, and if the holder presses the "abort" button then the call-back process is aborted and a new screen appears as depicted at STEP D1, which consists in displaying the name of contact 3 or the phone number of contact 3 while call to contact 3 is currently under initiation, i.e. mobile phone network 50 of French mobile operator is used for setting the call to the US, paying the due roaming fee to the French mobile operator through billing facilities of the US mobile operator which mobile phone equipment 30 belongs to.

In case the holder of mobile phone equipment 30 actuates the "launch" button, then at STEP D2 a further screen is displayed on the mobile phone equipment 30. Such further screen consists in an SMS body which is already filled with the following information : a username of the holder of mobile phone equipment 30, such username identifying the holder of the mobile phone equipment 30 as a user to the call-back service, a password as required by the call-back service, then prefix and phone number of a first mobile phone equipment indicated as "phone 1", which consist in prefix and phone number of the "My phone number" indicated previously, and then prefix and phone number of a second phone number, indicated as "phone 2", which consist in prefix and phone number of "My friend's phone number" as indicated previously.

At both steps C and D2, the holder of mobile phone equipment 30 is free to access contents of the screens for amending the content thereof. Such modification could consist in indicating another phone number for the phone equipment to be reached. Such modification could consist in a modification of the number of the phone equipment the holder wants to have the inbound call onto. Such a case can occur for example if the holder of mobile phone equipment 30 is nearby a landline phone equipment and wants to set the call using this landline phone equipment for better quality of sound. In such case the holder of mobile phone equipment 30 places the number of the landline phone equipment he wants to use himself in the "My phone number" window or in the part comprising the first phone identifier in the case of the screen of STEP D2.

The screen of STEP D2 comprises a button carrying a "Send to call-back service" indication. When the holder of mobile phone equipment 30 actuates such button, the automatically prepared SMS is sent to the call-back server 20.

The SMS is sent over the French mobile network 50, transits through the gateway 55 and is then carried over the internet 10 in a corresponding packet format until the call-back server 20 on the internet. The message may be sent to an interface server in the French mobile network 50 such interface server being equipped with an interface engine which is able to recognize an SMS directed to the server 20 and to convert such an SMS into a corresponding e-mail directed to the server 20 and then to send such e-mail to the server 20 over the internet.

The sending of information which is prepared by the subscriber identity token application 37 is not limited to an SMS message. In alternate embodiments, when the mobile phone equipment 30 is enabled for IP communication, the SMS which is automatically prepared by the subscriber identity module may be replaced by an e-mail or any kind of other IP sending of information. The e-mail is prepared by the subscriber identity module in the same way as for the SMS preparation above described. The IP sending may also be a form such as html form which is first downloaded from a web server by means of a browser stored and run in the subscriber identity token. The form is then filled automatically by the subscriber identity token, and then the filled form constitutes an IP sending of information back to the web server 20. The information sent is also generated inside the subscriber identity token in this case so that the sending of information departs from the subscriber identity token as well.

Another type of sending which is generated as well inside the token and sent therefrom and which advantageously replaces an SMS is an USSD (Unstructured Supplementary Service Data) sending. This alternate embodiment is very advantageous because the cost of USSD sending is close to zero.

Once having received the call-back sending of information from the subscriber identity token, i.e. either SMS, USSD, or IP based, the call-back server 20 sets a voice connection between mobile phone equipment 30 and landline phone equipment40 by calling back those two phones.

The remaining cost in this scheme is the termination fee for a call in France, which will be charged to the holder of mobile phone equipment 30 by the call-back service. The airtime fee per minute for landline phone equipment 40 will be paid by the landline phone equipment owner as is usual in the US in itself. The total ground cost of this service is therefore close to the cost of termination fee in France.

While the present example has been given for a call between phones located in France and the US, the call-back service may be set between two phones in the same country, with the use of two gateways connecting the internet with local areas of phone network(s) in this country. The cost is reduced as well because both mobile phones receive inbound calls.

The call-back enabled subscriber identity token may be the usual subscriber identity token of the end-user, or may be a temporary subscriber identity token, such as a subscriber identity token sold to the end-user for the use during his trip into a foreign country.

The temporary subscriber identity token may have a local number, i.e. a phone number of the visited country, or may have a phone number of the original country of the end-user. In this last case, the calls originating from the country of the end-user to this number, although the end-user is located abroad, are charged like a local call.

The application preparing the call-back sending has been described as automatically generating the information to be sent when the end-user is abroad and attempts to place a call.

Such application may be rather programmed for starting preparation of the call-back sending when it detects that the holder of the mobile phone equipment 30 is actuating a call to a particular destination. For example, the call-back application may be programmed for starting when the end-user attempts to place a call directed to the US, while not triggering when the end-user places a call directed to another country. The application may also be programmed for starting when an international call is detected, whatever the current location of the mobile phone equipment 30.

It has to be noted that the described implementation keeps much of its benefits when only one of the phones is a regular telephony phone, either landline or mobile, i.e. when one of the phones is a voice-over-IP phone, i.e. a phone directly connected to the inernet. Indeed, the communication at the level of the regular phone remains an inbound call and therefore the costs are highly lowered as well. It is therefore highly interesting that the communication be launched with a subscriber identity module according to the invention in such a scheme as well.

The subscriber identity token has been described as the one hosted in one of the later called-back phone equipments. The subscriber identity token may also be used for indicating the called phone number(s) of phone(s) other than the one hosting the subscriber identity module launching the call-back.

Thanks to this call-back trigger mechanism automatically prepared in the subscriber identity module, mobile phone users who want to place low cost international calls are enabled for such call-back service, without any dependency on the capabilities of the mobile phone itself. The invention allows to perform an internet call-back service without the need of a mobile handset based browser nor the need of any specific firmware in the mobile phone, thereby allowing the holder of a subscriber identity token to launch the service whatever the mobile phone that hosts his subscriber identity token.

## Claims

1. A mobile telephony call-back method comprising the steps which consist of :
a) indicating addresses (71,72,74,75) of a first and a second phone equipment (30, 35, 40) to a call-back server (20) by a sending of information to the call-back server said sending being performed by a mobile phone equipment (30,35) comprising a subscriber identity token (35),
b) having the call-back server set a voice connection between the first and second phone equipments the address of which are indicated by said sending of information made to the call-back server (20), by the call-back-server :
b1) initiating inbound calls to the first and second phone equipments on phone network(s) (50,60) of the first and second phone equipments (30,35,40),
b2) setting the voice connection through at least one gateway (55,65) between the internet and phone network(s) of the first and/or the second phone equipments so that at least part of the voice connection is supported by the internet,
the method being **characterized in that** it comprises the step which consists in having the said information generated inside the subscriber identity token so that the sending of information to the call-back server (20) departs from the subscriber identity token.

2. The method according to claim 1, **characterized in that** the subscriber identity token runs an application (37) which generates the information to be sent.

3. The method according to the preceding claim, **characterized in that** the subscriber identity token stores a phonebook and the application generates the information in response to actuation of a contact of the phonebook by a holder of the mobile phone equipment (30, 35).

4. The method according to the preceding claim, **characterized in that** the application introduces the address of a phone equipment into the information to be sent by retrieving the address from the phonebook said address corresponding to the contact of the phonebook as actuated by the holder of the mobile phone equipment (30, 35).

5. The method according to claim 1, **characterized in that** the application fetches a password as required by the call-back from a memory of the subscriber identification token (35) and places such password into the information to be sent.

6. The mobile telephony method according to anyone of the preceding claims,
**characterized in that** the application requests a holder of the mobile phone equipment (30, 35) to enter the address of one of the phone equipments.

7. The method according to anyone of the preceding claims, **characterized in that** the information is sent as an SMS message.

8. The method according to anyone of claims 1 to 6, **characterized in that** the information is sent over USSD.

9. The method according to anyone of claims 1 to 6, **characterized in that** the mobile phone equipment (30, 35) is enabled for Internet Protocol communication and the information is sent over Internet Protocol.

10. The method according to anyone of the preceding claims, **characterized in that** the subscriber identification token (35) is a SIM card.

11. The method according to claim 1, **characterized in that** the sending of information indicates the address of one the phone equipments (30,35,40) to be called back by indication of the entity from which the sending originates.

12. A mobile telephony device arranged for indicating addresses of a first and a second phone equipment (30,35,40) to a call-back server (20) by a sending of information to the call-back server (20), so that the call-back server (20) sets a voice connection between the first and second phone equipment, the address of which are indicated by said sending of information made to the call-back server (20), the call-back-server (20) initiating inbound calls to the first and second phone equipments (30,35,40) on phone network(s) (50,60) of the first and second phone equipments (30,35,40) and setting the voice connection through at least one gateway (55,65) between the internet and phone network(s) (50,60) of the first and/or the second phone equipment so that at least part of the voice connection is supported by the internet, the mobile telephony equipment consisting in a subscriber identity token (35), said subscriber identity token being enabled for generating the said information to be sent so that the sending of information to the call-back server (20) departs from the subscriber identity token (35).

13. the mobile caller device according to claim 12, **characterized in that** the subscriber identity token is a SIM card.
